# EUROPEAN PATENT APPLICATION

(11) **EP 4 793 177 A1**
(43) Date of publication of application: **19.08.2026**
(21) Application number: 24891149.7
(22) Date of filing: 18.10.2024
(51) Int. Cl.: B64U 10/13, B64C 13/18, B64U 10/17, B64U 70/93

(54) **AIRCRAFT POSITION CONTROL SYSTEM, AIRCRAFT, AND AIRCRAFT POSITION CONTROL METHOD**

(30) Priority: 14.11.2023 JP 2023193878
(71) Applicant: Mitsubishi Heavy Industries, Ltd., Chiyoda-ku Tokyo 100-8332 (JP)
(72) Inventor: KOJIMA, Toru, Tokyo 100-8332 (JP)
(74) Representative: Hoffmann Eitle
(86) International application number: PCT/JP2024/037131
(87) International publication number: WO 2025/105107

(57) **Abstract**

Provided is an aircraft position control system that, during takeoff of an aircraft mounted on a moving vehicle that moves, controls the relative position of the aircraft with respect to the moving vehicle, the aircraft position control system comprising: a position detection unit that is provided to the aircraft and acquires the position of the aircraft; and a control unit that controls a flight operation of the aircraft. The control unit acquires the movement velocity and the movement direction of the moving vehicle on the basis of the detection result of the position detection unit, and causes the aircraft to fly upward on the basis of the acquired movement velocity and movement direction of the moving vehicle.

## Description

### Technical Field

The present disclosure relates to an aircraft position control system, an aircraft, and an aircraft position control method.

### Background Art

In the related art, a control device for enabling an aircraft to take off from or land on a vessel is known (for example, refer to PTL 1). The control device of PTL 1 includes a hull motion prediction device that predicts a hull motion of a vessel, a takeoff/landing state indication device that receives an output of the hull motion prediction device and calculates a takeoff/landing state of an aircraft on the vessel, an instruction transmission device that transmits an output of the takeoff/landing state indication device, an instruction reception device that receives an output of the instruction transmission device, and a flight motion control device that receives an output of the instruction reception device and controls a flight operation. The hull motion prediction device, the takeoff/landing state indication device, and the instruction transmission device are provided in a vessel, and the instruction reception device and the flight motion control device are provided in an aircraft.

### Citation List

### Patent Literature

[PTL 1] Japanese Unexamined Patent Application Publication No. H04-71998

### Summary of Invention

### Technical Problem

In PTL 1, the takeoff and landing relate to a fixed-wing aircraft, and the aircraft taxis on the vessel at a time of takeoff from the vessel. Meanwhile, a rotary-wing aircraft generally takes off by climbing from a takeoff/landing point. Therefore, in the related art, the rotary-wing aircraft climbs while keeping a position at a timing at which the aircraft is instructed to take off from the vessel as a reference, without being linked to movement of the vessel. In this case, the rotary-wing aircraft takes off from the vessel and climbs while the vessel moves forward. As a result, the rotary-wing aircraft moves relatively to rear of the vessel, so that there is a concern that the rotary-wing aircraft may physically interfere with the vessel.

Therefore, an object of the present disclosure is to provide an aircraft position control system, an aircraft, and an aircraft position control method with which it is possible to suitably make an aircraft take off from a moving vehicle such as a vessel. Solution to Problem

An aircraft position control system of the present disclosure is an aircraft position control system that controls, during takeoff of an aircraft mounted on a moving vehicle that moves, a relative position of the aircraft with respect to the moving vehicle, the aircraft position control system including: a position detection unit that is provided in the aircraft and acquires a position of the aircraft; and a control unit that controls a flight operation of the aircraft, in which the control unit acquires a movement velocity and a movement direction of the moving vehicle based on a detection result of the position detection unit, and the control unit causes the aircraft to execute a climbing flight operation based on the acquired movement velocity and movement direction of the moving vehicle.

An aircraft of the present disclosure includes the aircraft position control system.

An aircraft position control method of the present disclosure is an aircraft position control method executed by a position control system that controls, during takeoff of an aircraft mounted on a moving vehicle that moves, a relative position of the aircraft with respect to the moving vehicle, the aircraft position control method including: via the position control system, acquiring a movement velocity and a movement direction of the moving vehicle based on a detection result of a position detection unit that is provided in the aircraft; and causing the aircraft to execute a climbing flight operation based on the acquired movement velocity and movement direction of the moving vehicle.

### Advantageous Effects of Invention

According to the present disclosure, it is possible to suitably make the aircraft take off from the moving vehicle such as the vessel.

### Brief Description of Drawings

FIG. 1 is a schematic configuration diagram showing an example of an aircraft position control system according to a first embodiment.
FIG. 2 is an explanatory diagram relating to the position control of an aircraft according to the first embodiment.
FIG. 3 is an explanatory diagram relating to the determination of motion by the aircraft according to the first embodiment.
FIG. 4 is an explanatory diagram relating to a platform for UAV takeoff and landing on vessels of the aircraft position control system according to the first embodiment.
FIG. 5 is a flowchart relating to an aircraft position control method according to the first embodiment.
FIG. 6 is a schematic configuration diagram showing an example of an aircraft position control system according to a second embodiment.
FIG. 7 is an explanatory diagram relating to the position control of an aircraft according to the second embodiment.
FIG. 8 is an explanatory diagram relating to an estimator according to the second embodiment.
FIG. 9 is an explanatory diagram relating to the position control of an aircraft according to a third embodiment.

### Description of Embodiments

Embodiments according to the present disclosure will be described in detail below with reference to the drawings. Note that this disclosure is not limited to the embodiment. In addition, components in the following embodiment include those that can be easily replaced by those skilled in the art or those that are substantially the same. Further, the components described below can be combined as appropriate, and in a case where there are a plurality of embodiments, the embodiments can also be combined.

### [First Embodiment]

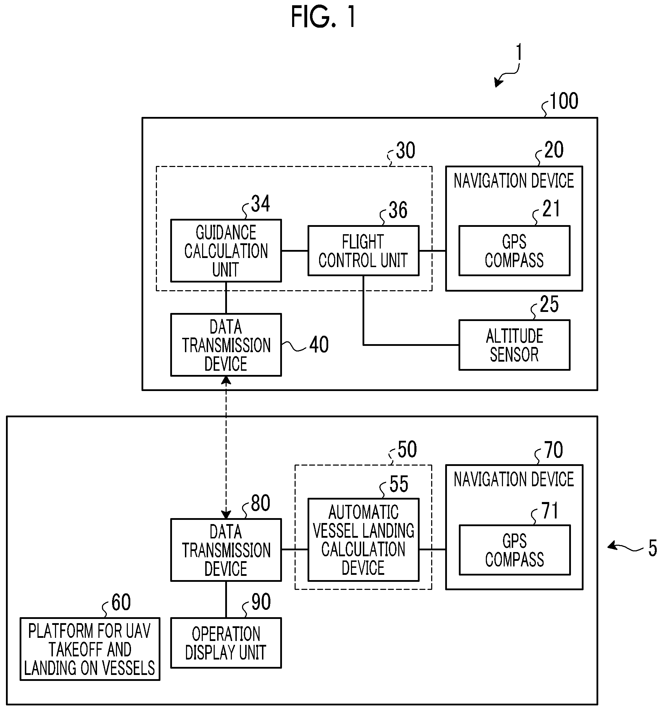

FIG. 1 is a schematic configuration diagram showing an example of an aircraft position control system according to a first embodiment.

As shown in FIG. 1, an aircraft 1 is a flying object (for example, a helicopter, a drone, or the like) as a rotary-wing aircraft. In the present embodiment, the aircraft 1 is an unmanned aerial vehicle (UAV). The aircraft 1 may be any flying object capable of moving forward, moving rearward, moving laterally, turning, and hovering, and may be a manned aircraft. The aircraft 1 is equipped with a position control system 100, and the flight is controlled by the position control system 100.

### (Position Control System)

The position control system 100 according to the present embodiment is a system that controls a relative position of the aircraft 1 with respect to a vessel 5, which is a moving vehicle, in a case where the aircraft 1 mounted on the vessel 5 is caused to take off from the vessel 5, in order to suppress physical interference with the vessel 5. The position control system 100 may be configured as a system that is mounted on only the aircraft 1, or may be configured as a system that is mounted on the aircraft 1 and the vessel 5. In the present embodiment, the position control system 100 is applied to the vessel 5 serving as the moving vehicle, but may be applied to a land vehicle such as a car, serving as the moving vehicle.

### (Vessel)

As shown in FIG. 1, the vessel 5 includes a control unit 50, a navigation device 70, a data transmission device 80, and an operation display unit 90. In addition, the vessel 5 includes a marker 7 that is a target when the aircraft 1 lands on the vessel, and a platform for UAV takeoff and landing on vessels (placement platform) 60 on which the aircraft 1 is placed when the aircraft 1 takes off (take off from the vessel).

The navigation device 70 is, for example, an inertial navigation system (INS) and acquires attitude angles in a pitch direction and a roll direction, a vessel heading, a velocity, an acceleration, position coordinates in the earth coordinate system, and the like of the vessel 5. In the first embodiment, the navigation device 70 is described as being applied to the inertial navigation device, but is not particularly limited, and any navigation device 70 may be used. In addition, in the first embodiment, the navigation device 70 is an inertial navigation device including a global positioning system (GPS) in order to improve the measurement accuracy of the position, and functions as the position detection unit. The navigation device 70 includes a GPS compass 71, and the GPS compass 71 detects the heading of the vessel 5 from a relative positional relationship between two or more antennas. Therefore, the navigation device 70 acquires the position and the heading of the vessel 5. In the first embodiment, the inertial navigation device including the GPS is applied and described. However, the present disclosure is not particularly limited to the GPS, and any position detection unit capable of accurately measuring a position may be used. For example, a quasi-zenith satellite system may be used, and a configuration in which the position measurement unit such as the GPS is omitted may be used as long as the position can be accurately measured only by the navigation device 70. In addition, the navigation device 70 may acquire at least a part of various types of data by a sensor.

The data transmission device 80 exchanges various signals with the data transmission device 40 mounted on the aircraft 1 through wireless communication.

The operation display unit 90 is a user interface through which an operator on board the vessel 5 grasps a control status and inputs various instructions. The instruction input in the operation display unit 90 is transmitted from the data transmission device 80 to the data transmission device 40. In addition, the control status of the aircraft 1 is transmitted from the data transmission device 40 to the data transmission device 80. That is, the data transmission device 40 and the data transmission device 80 can perform bidirectional communication.

For example, the control unit 50 includes an integrated circuit such as a central processing unit (CPU). The control unit 50 controls an operation of the vessel 5 based on the input data. The control unit 50 includes an automatic vessel landing calculation device 55, and the automatic vessel landing calculation device 55 assists the aircraft 1 automatically landing on the vessel 5. The automatic vessel landing calculation device 55 determines whether the vessel 5 is in a state in which the aircraft 1 can land thereon, and specifically controls the operation of the vessel 5 such that the relative wind has a predetermined wind direction and a predetermined wind velocity.

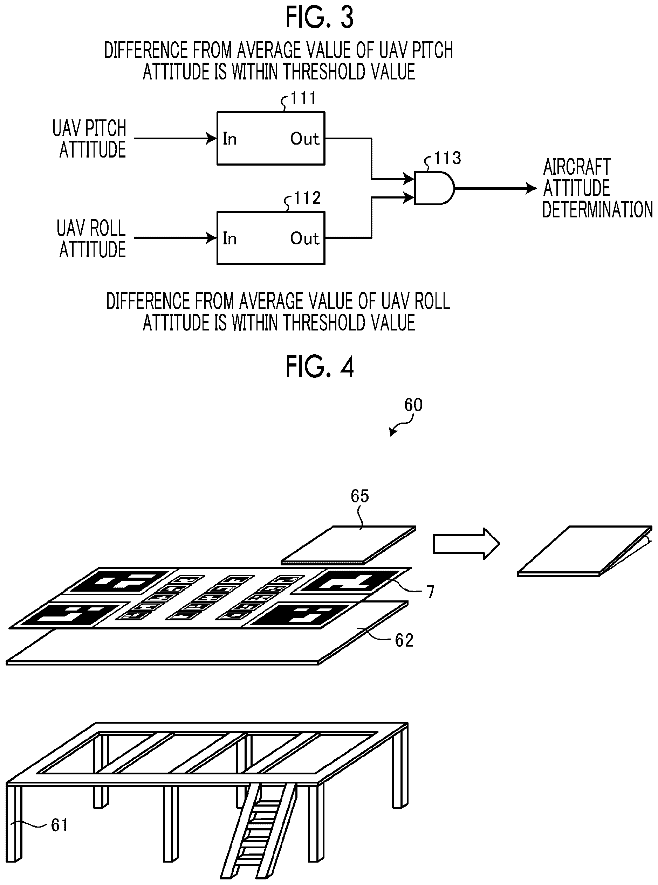

Next, the marker 7 and the platform for UAV takeoff and landing on vessels 60 will be described with reference to FIG. 4. FIG. 4 is an explanatory diagram relating to a platform for UAV takeoff and landing on vessels of the aircraft position control system according to the present embodiment. The marker 7 is integrally provided on the platform for UAV takeoff and landing on vessels 60, and the platform for UAV takeoff and landing on vessels 60 is installed on the vessel 5.

The platform for UAV takeoff and landing on vessels 60 includes a base 61, a flat plate 62, the marker 7, and a platform main body 65 installed on an uppermost surface. The base 61 is a frame that serves as a structural skeleton. The flat plate 62 is installed on the upper surface of the base 61, and the upper surface is a flat surface. The marker 7 is a sheet-shaped member, and is provided on the upper surface of the flat plate 62. The marker 7 is, for example, an augmented reality (AR) marker color-coded in two colors of black and white, and is a marker for the aircraft 1 to capture the position of the target landing point. The platform main body 65 is installed on the marker 7. The platform main body 65 changes an inclination angle of a placement surface on which the aircraft 1 is placed, with respect to the upper surface of the marker 7. The platform main body 65 is a mechanism that changes an attitude angle of the aircraft 1 such that a pitch-down state in which a nose of the aircraft 1 to be installed is lowered is achieved. The platform main body 65 may be a mechanism that manually changes the inclination angle, or may be a mechanism that automatically changes the inclination angle. **In** a case where the inclination angle of the platform main body 65 is automatically changed, the platform for UAV takeoff and landing on vessels 60 and the control unit 50 of the vessel 5 are connected, and the inclination angle of the platform for UAV takeoff and landing on vessels 60 is changed by the control unit 50.

The platform for UAV takeoff and landing on vessels 60 changes the attitude of the aircraft 1 such that the aircraft 1 installed on the platform main body 65 is in a pitch-down state in which the nose is lowered by changing the inclination angle of the platform main body 65. That is, the platform for UAV takeoff and landing on vessels 60 functions as a pitch-down unit that causes the aircraft 1 to pitch down.

### (Aircraft)

As shown in FIG. 1, the aircraft 1 includes a navigation device 20, a control unit 30, a flight control unit 36, and a data transmission device 40.

The navigation device 20 is, for example, an inertial navigation system (INS), as in the navigation device 70, and functions as the position detection unit. The navigation device 20 also includes a GPS compass 21, and the GPS compass 21 detects the heading of the aircraft 1 from a relative positional relationship between two or more antennas. Therefore, the navigation device 20 acquires the position and the heading of the aircraft 1. The GPS compass 21 is not particularly limited, and for example, a compass such as a gyrocompass may be applied. In addition, the navigation device 20 may be an inertial navigation device including a position measurement unit such as GPS, as in the navigation device 70, or may be an inertial navigation device excluding a position detection unit such as GPS, and is not particularly limited.

The navigation device 20 including the GPS acquires attitude angles of the aircraft 1 in a roll direction, a yaw direction, and a pitch direction, an aircraft velocity, an inertial velocity, an aircraft acceleration, an aircraft heading, position coordinates in an earth coordinate system, and the like of the aircraft 1. The navigation device 20 may have an attitude angle sensor that detects the attitude angle of the aircraft 1, a velocity sensor that detects an aircraft velocity of the aircraft 1, an acceleration sensor that detects the aircraft acceleration of the aircraft 1, and a sensor that detects an aircraft heading of the aircraft 1. The navigation device 20 outputs the acquired attitude angle, aircraft velocity, inertial velocity, aircraft acceleration, aircraft heading, and position coordinates of the aircraft 1 to the flight control unit 36.

In addition, as shown in FIG. 1, the position control system 100 includes an altitude sensor 25 that detects an altitude of the aircraft 1 from a ground surface or a water surface. The altitude sensor 25 is, for example, a laser altimeter, and measures a relative altitude from the aircraft 1 to the target landing point. As the altitude sensor 25, a radio altimeter, a barometric altimeter, or any altimeter may be used.

For example, the control unit 30 includes an integrated circuit such as a central processing unit (CPU). The control unit 30 includes a guidance calculation unit 34, and a flight control unit 36.

The guidance calculation unit 34 calculates the control quantity for guiding the aircraft 1. The control quantity is a control quantity for adjusting the aircraft velocity, the attitude angle, the change rate of the attitude angle, and the like of the aircraft 1.

The flight control unit 36 controls each component of the aircraft 1 to fly the aircraft 1 in accordance with the control quantity calculated by the guidance calculation unit 34. The flight control unit 36 controls a blade pitch angle, the rotation velocity, and the like of each rotary wing according to the control quantity, and adjusts the aircraft velocity, the attitude angle, the change rate of the attitude angle, and the like of the aircraft 1. Accordingly, the aircraft 1 is guided to the target position. In the present embodiment, the guidance calculation unit 34 is described as a separate functional unit from the flight control unit 36. However, the flight control unit 36 and the guidance calculation unit 34 may be integrated into one functional unit. That is, the flight control unit 36 may perform the processing of the guidance calculation unit 34.

### (Position Control of Aircraft)

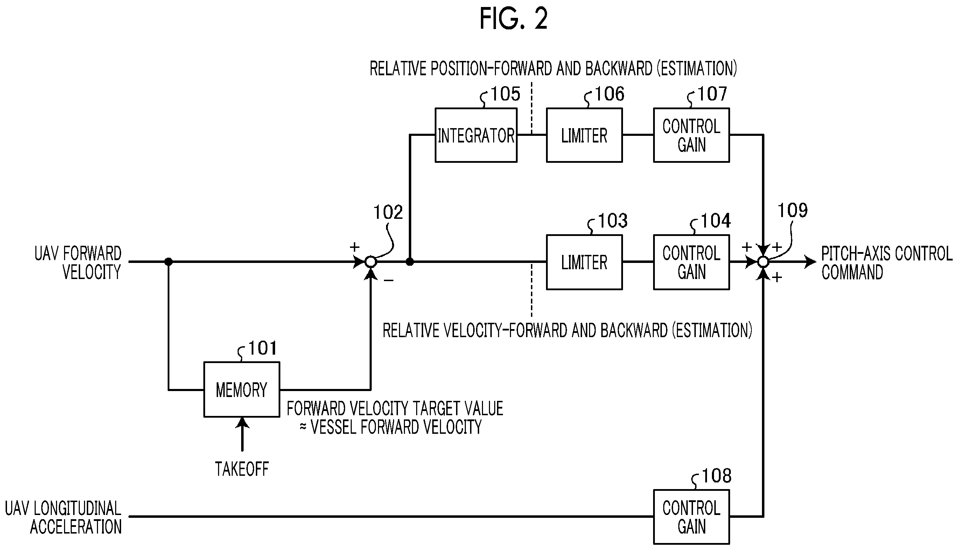

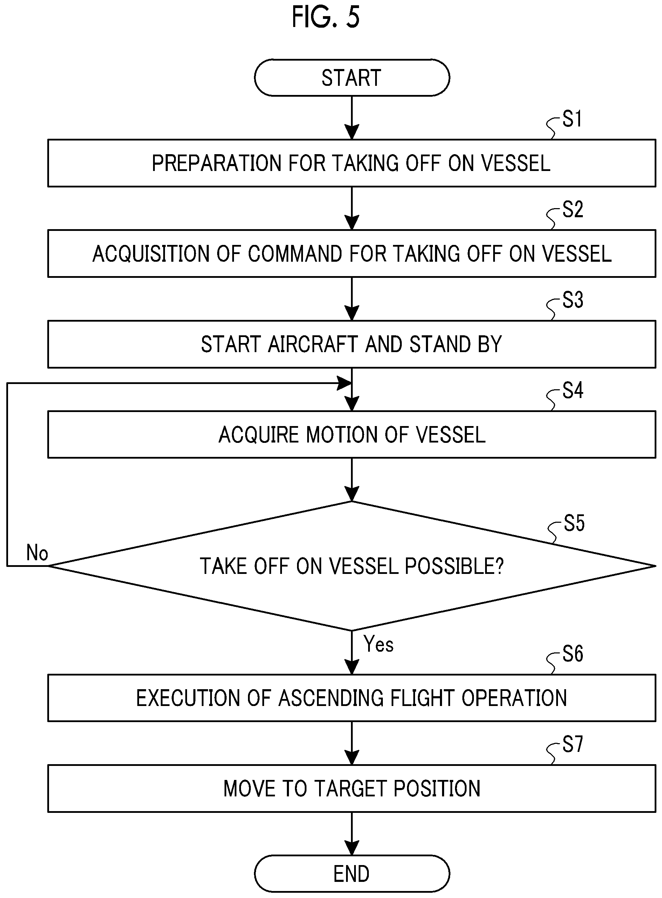

Next, the position control of the aircraft 1 according to the present embodiment will be described with reference to FIGS. 2, 3, and 5. FIG. 2 is an explanatory diagram relating to the position control of an aircraft according to the present embodiment. FIG. 3 is an explanatory diagram relating to the determination of motion by the aircraft according to the present embodiment. FIG. 5 is a flowchart relating to an aircraft position control method according to the present embodiment.

In the position control of the aircraft 1, during the takeoff of the aircraft 1, a climbing flight operation of the aircraft 1 is controlled in accordance with the operation of the vessel 5. In the position control of the aircraft 1, the control unit 30 of the aircraft 1 acquires the movement velocity and the movement direction (heading) of the aircraft 1 based on the position of the aircraft 1 acquired by the navigation device 20 of the aircraft 1, and controls the flight operation of the aircraft 1 at the time of takeoff based on the acquired movement velocity and heading of the aircraft 1. Specifically, in the position control of the aircraft 1, the guidance calculation unit 34 calculates the control quantity based on the block diagram shown in FIG. 2. In FIG. 2, the control quantity (pitch-axis control command) in the direction of the pitch axis is calculated, but the same applies to the direction of the roll axis.

As shown in FIG. 2, the guidance calculation unit 34 includes a memory 101 that stores a vessel velocity, a subtractor 102, a limiter 103 and a control gain 104 for a relative velocity, an integrator 105, a limiter 106 and a control gain 107 for a relative position, a control gain 108 for longitudinal acceleration, and an adder 109.

The memory 101 stores a forward velocity of the vessel 5 at the time of the takeoff of the aircraft 1. The timing at which the vessel velocity is stored in the memory 101 may be a time at which the instruction for takeoff is issued, or may be a time immediately before takeoff. That is, the timing at which the vessel velocity is stored in the memory 101 may be any timing between the time at which the instruction for takeoff is issued and the time immediately before takeoff. In addition, the vessel velocity stored in the memory 101 is acquired based on the position of the aircraft 1 acquired by the navigation device 20 of the aircraft 1. The vessel velocity stored in the memory 101 is based on a premise that the vessel 5 navigates at a constant vessel velocity at a predetermined heading at the time of the takeoff of the aircraft 1.

The subtractor 102 calculates a relative velocity obtained by subtracting the vessel velocity stored in the memory 101 from the forward velocity that is the actual velocity of the aircraft 1. The limiter 103 limits the calculated relative velocity not to exceed a preset threshold value. The control gain 104 applies a gain of the feedback control to the relative velocity that is the input signal to output the control quantity of the pitch axis as the output signal. The integrator 105 integrates the calculated relative velocity to calculate the relative position. The limiter 106 limits the calculated relative position not to exceed a preset threshold value. The control gain 107 applies the gain of the feedback control to the relative position that is the input signal to output the control quantity of the pitch axis as the output signal. The control gain 108 applies the gain of the feedback control to the longitudinal acceleration (that is, acceleration in the vertical direction) of the aircraft 1 that is the input signal to output the control quantity of the pitch axis as the output signal. The adder 109 adds the control quantity based on the relative position, the control quantity based on the relative velocity, and the control quantity based on the longitudinal acceleration, and outputs the added control quantity of the pitch axis.

Therefore, the flight control unit 36 controls the climbing flight operation of the aircraft 1 in accordance with the control quantity calculated by the guidance calculation unit 34, so that the aircraft 1 can execute the climbing flight operation in consideration of the vessel velocity and the heading of the vessel 5. Here, in the climbing flight operation of the aircraft 1 at the time of takeoff, the climbing flight operation may be executed based on the aircraft heading of the aircraft 1 as a reference. That is, in a case where the aircraft heading of the aircraft 1 is used as the reference, the flight control unit 36 executes the climbing flight operation of the aircraft 1 without using the heading of the vessel 5. **In** addition, in the climbing flight operation of the aircraft 1 at the time of takeoff, the climbing flight operation may be executed based on the aircraft heading of the aircraft 1 and the heading of the vessel 5. That is, in a case where the aircraft heading of the aircraft 1 and the heading of the vessel 5 are used, the flight control unit 36 determines the heading as the reference based on the aircraft heading of the aircraft 1 and the heading of the vessel 5, and executes the climbing flight operation based on the determined heading as the reference.

Next, the determination of motion of the vessel 5 by the aircraft 1 will be described with reference to FIG. 3. The control unit 30 of the aircraft 1 includes a determiner 111 that determines the motion of the aircraft 1 in the pitch direction, a determiner 112 that determines the motion of the aircraft 1 in the roll direction, and an AND circuit 113.

The determiner 111 receives the displacement amount of the aircraft 1 in the pitch direction. The determiner 111 calculates a difference between the input displacement amount and an average value of the displacement amount in the pitch direction, and outputs the output signal in a case where the calculated difference is within a preset threshold value. The determiner 112 receives the displacement amount of the aircraft 1 in the roll direction. The determiner 112 calculates a difference between the input displacement amount and an average value of the displacement amount in the roll direction, and outputs the output signal in a case where the calculated difference is within a preset threshold value. The AND circuit 113 outputs a determination flag indicating that the takeoff of the aircraft 1 is possible in a case where the output signal is input from the determiner 111 and the output signal is input from the determiner 112, on the premise that the motion of the vessel 5 is small.

Next, the aircraft position control method according to the present embodiment will be described with reference to FIG. 5. In a case where the position control of the aircraft is executed at the time of the takeoff of the aircraft 1, first, the preparation for takeoff on the vessel is executed (step S1). Specifically, in step S1, the aircraft 1 is installed on the platform for UAV takeoff and landing on vessels 60, and the vessel 5 navigates such that the relative wind with respect to the aircraft 1 has a predetermined wind direction and a predetermined wind velocity. In this case, the relative wind is set such that the windward side of the relative wind is the nose side of the aircraft 1 and the leeward side of the relative wind is the tail side of the aircraft 1. In addition, in step S1, the inclination angle of the platform for UAV takeoff and landing on vessels 60 is adjusted in accordance with the relative wind with respect to the aircraft 1. That is, in a case where the relative wind with respect to the aircraft 1 is large, the inclination angle is increased to set the aircraft 1 to the pitch-down state in which the nose is lowered. On the other hand, in a case where the relative wind with respect to the aircraft 1 is small, the inclination angle is decreased to set the aircraft 1 to the horizontal state.

After step S1 is executed, the control unit 30 of the aircraft 1 acquires the command for takeoff on the vessel (step S2). In step S2, the command for takeoff on the vessel is output from, for example, an operation unit that operates the aircraft 1. In a case where the command for takeoff on the vessel is acquired in step S2, the aircraft 1 starts an operation of rotating the rotary wing and maintains the standby state (step S3). Thereafter, the aircraft 1 acquires the motion of the vessel 5 based on the position of the aircraft 1 detected by the navigation device 20 (step S4), and determines whether the takeoff of the aircraft 1 on the vessel is possible by the determination of motion shown in FIG. 3 (step S5). That is, in step S5, in the determination of motion shown in FIG. 3, in a case where the determination flag is output, it is determined that the takeoff of the aircraft 1 on the vessel is possible (step S5: Yes). On the other hand, in a case where the determination flag is not output, it is determined that the takeoff of the aircraft 1 on the vessel is impossible (step S5: No). In a case where the control unit 30 determines that the takeoff of the aircraft 1 is impossible, the control unit 30 proceeds to step S4 again.

In a case where the control unit 30 determines in step S5 that the takeoff of the aircraft 1 on the vessel is possible, the aircraft 1 executes the climbing flight operation until the aircraft 1 reaches a predetermined altitude while executing the relative position control shown in FIG. 2 (step S6). In a case where the aircraft 1 reaches the predetermined altitude, the control unit 30 moves the aircraft 1 to the target position that is set in advance (step S7). After step S7 is executed, the control unit 30 ends the relative position control of the aircraft 1 at the time of takeoff.

In the present embodiment, steps S6 and S7 are executed separately, but may be executed at the same time. That is, after step S5 is executed, the control unit 30 may cause the aircraft 1 to execute the climbing flight operation toward the target position that is set in advance while executing the relative position control shown in FIG. 2.

In addition, the target position may be set directly above the vessel 5 that moves, and the climbing flight operation may be a flight operation of climbing in the vertical direction toward the target position. In addition, the target position may be optionally set by the operator who operates the aircraft 1 before and after the takeoff of the aircraft 1, or may be set as a fixed position in advance.

In addition, in the present embodiment, the aircraft 1 is set to the pitch-down state by using the platform for UAV takeoff and landing on vessels 60, but a configuration in which the platform for UAV takeoff and landing on vessels 60 is omitted may be used. That is, the aircraft 1 may be set to the pitch-down state by the flight control of the aircraft 1. For example, a rotational plane (rotor plane) of the main rotor of the aircraft 1 may be inclined forward, or a swash plate of the aircraft 1 may be inclined to be in the pitch-down state.

In addition, in the present embodiment, the premise is that the vessel 5 navigates at a constant vessel velocity at a predetermined heading at the time of the takeoff of the aircraft 1, but the heading and the velocity of the vessel 5 may be arbitrary as long as the relative wind that changes due to the navigation of the vessel 5 can be predicted.

### [Second Embodiment]

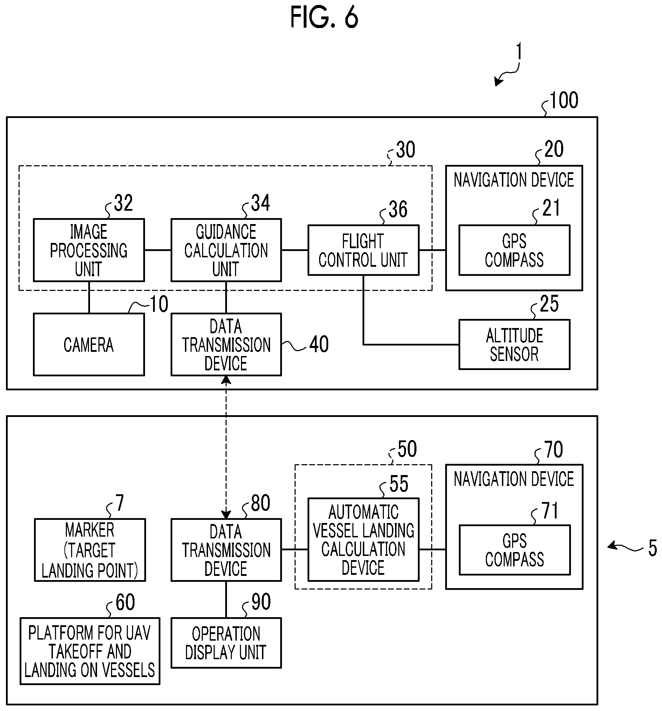

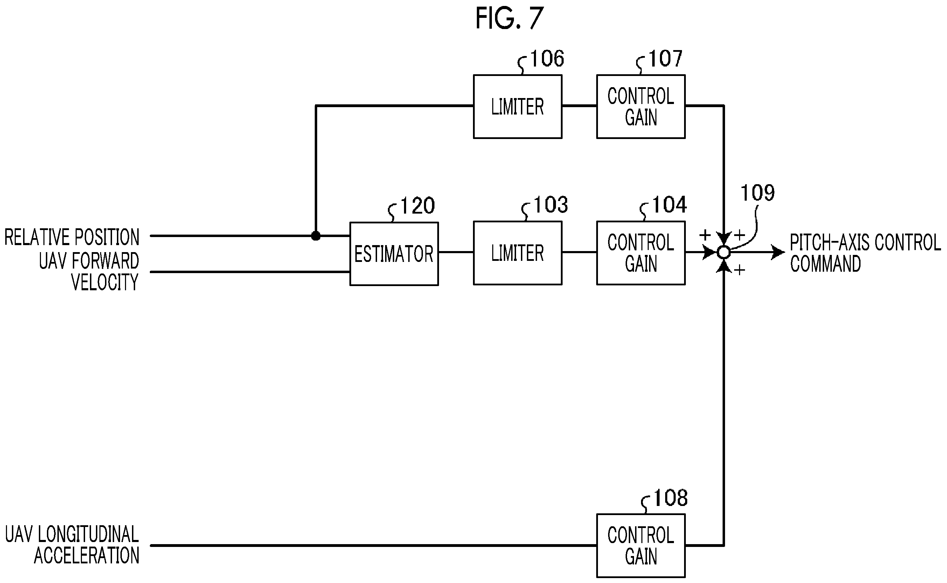

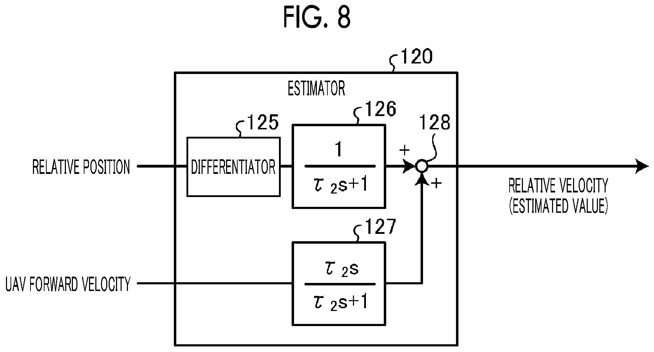

Subsequently, a second embodiment will be described with reference to FIGS. 6 to 8. FIG. 6 is a schematic configuration diagram showing an example of an aircraft position control system according to a second embodiment. FIG. 7 is an explanatory diagram relating to the position control of an aircraft according to the second embodiment. FIG. 8 is an explanatory diagram relating to an estimator according to the second embodiment. In the second embodiment, in order to avoid duplicate description, portions different from those in the first embodiment will be described, and portions having the same configuration as those in the first embodiment will be described with the same reference numerals.

The position control system 100 according to the second embodiment acquires the relative position between the aircraft 1 and the target landing point, and executes the position control of the aircraft 1. Therefore, the position control system 100 further includes a camera 10 provided in the aircraft 1, an image processing unit 32 provided in the control unit 30 of the aircraft 1, and the marker 7 provided on the vessel 5 as the target landing point, in addition to the configuration of the first embodiment. Meanwhile, since the position control system 100 acquires the relative position, the configuration in which the memory 101 and the subtractor 102 which are provided in the first embodiment are omitted is adopted.

The camera 10 is a photographing device mounted on the aircraft 1 via a gimbal (not shown). The camera 10 may be a monocular camera, a stereo camera, an infrared camera, or the like, as long as the camera 10 can photograph the marker 7. The camera 10 is provided to photograph the marker 7 provided at the target landing point from the aircraft 1. The camera 10 can adjust a photographing direction via a gimbal (not shown).

The image processing unit 32 performs image processing on the image photographed by the camera 10 to detect the center position of the marker 7. The image processing unit 32 outputs the calculated center position of the marker 7 to the guidance calculation unit 34.

The guidance calculation unit 34 calculates the control quantity for guiding the aircraft 1 to the target landing point (center position of the marker 7). The control quantity is a control quantity for adjusting the aircraft velocity, the attitude angle, the change rate of the attitude angle, and the like of the aircraft 1. The guidance calculation unit 34 calculates a relative coordinate position between the aircraft 1 and the target landing point in order to calculate the control quantity. Specifically, the guidance calculation unit 34 calculates the relative position between the aircraft 1 and the target landing point and the relative altitude between the aircraft 1 and the target landing point as the relative coordinate position. **In** addition, the guidance calculation unit 34 calculates the relative velocity or the like between the aircraft 1 and the target landing point. The relative position is a distance between the aircraft 1 and the target landing point of the vessel 5 in the horizontal direction. The relative altitude is a distance between the aircraft 1 and the target landing point of the vessel 5 in the vertical direction.

The guidance calculation unit 34 calculates the relative position between the aircraft 1 and the target landing point based on the center position of the marker 7 calculated by the image processing unit 32, the heading of the camera 10, that is, the aircraft heading of the aircraft 1, and the altitude of the aircraft 1 (the relative altitude with respect to the target landing point). **In** addition, the guidance calculation unit 34 calculates the relative altitude to the target landing point based on the altitude of the aircraft 1 detected by the altitude sensor 25.

**In** addition, the guidance calculation unit 34 calculates a relative velocity between the aircraft 1 and the target landing point. More specifically, the guidance calculation unit 34 executes relative velocity estimation processing of calculating a relative velocity between the aircraft 1 and the target landing point by an estimator 120 described below based on the relative position and the aircraft velocity.

Then, the guidance calculation unit 34 calculates a control quantity by feedback control (for example, proportional-integral-derivative (PID) control) based on the relative position, the relative altitude, the relative velocity, and the aircraft acceleration. The feedback control is not limited to the PID control, and may be a proportional (P) control, a proportional-integral (PI) control, a proportional-derivative (PD) control, or the like. The guidance calculation unit 34 outputs the calculated control quantity to the flight control unit 36.

The relative position is not particularly limited to the acquisition using the marker 7, the camera 10, and the image processing unit 32, and may be acquired using a high-accuracy position detector such as GPS (for example, Real-Time Kinematic (RTK)-GPS).

In addition, as shown in FIG. 7, the guidance calculation unit 34 includes the estimator 120 instead of the memory 101 and the subtractor 102 of the first embodiment. In addition, the guidance calculation unit 34 has a configuration in which the integrator 105 of the first embodiment is omitted.

As shown in FIG. 8, the relative position and the forward velocity that is the actual velocity of the aircraft 1 are input as input signals to the estimator 120. The estimator 120 includes a differentiator 125, a low-pass filter 126, a high-pass filter 127, and an adder 128.

The acquired relative position is input to the differentiator 125, and the relative velocity that is the estimated value is calculated by differentiating the relative position. The low-pass filter 126 is a filter that damps a frequency equal to or higher than a predetermined cutoff frequency with respect to the relative velocity input from the differentiator 125. **In** the drawing, "s" is an operator, and "τ2" is a time constant. The low-pass filter 126 removes the high-frequency component of the relative velocity and outputs the low-frequency component included in the relative velocity to the adder 128. The acquired forward velocity of the aircraft 1 is input to the high-pass filter 127. The high-pass filter 127 is a filter that damps a frequency equal to or lower than a predetermined cutoff frequency with respect to the forward velocity of the aircraft 1. The high-pass filter 127 removes the low-frequency component of the forward velocity of the aircraft 1 and outputs the high-frequency component included in the relative velocity to the adder 128. The adder 128 adds the relative velocity output from the low-pass filter 126 and the relative velocity output from the high-pass filter 127. The adder 128 outputs the relative velocity that is the estimated value to the limiter 103. The acquired relative position is directly input to the limiter 106.

### [Third Embodiment]

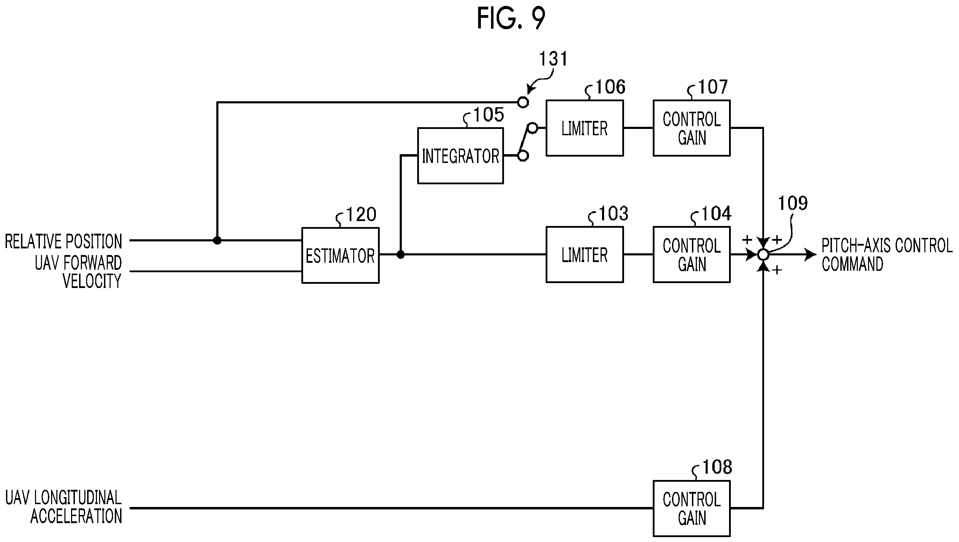

Next, a third embodiment will be described with reference to FIG. 9. FIG. 9 is an explanatory diagram relating to the position control of an aircraft according to a third embodiment. **In** the third embodiment as well, in order to avoid duplicate description, portions different from those in the first embodiment and the second embodiment will be described, and portions having the same configuration as those in the first embodiment and the second embodiment will be described with the same reference numerals.

The position control system 100 according to the third embodiment is a system in which the relative position input to the limiter 106 is switched by a switch 131 in the position control system 100 according to the second embodiment.

The switch 131 executes switching between a first connection pattern in which the acquired relative position is directly input to the limiter 106 and a second connection pattern in which the acquired relative position is input via the estimator 120 and the integrator 105. The switch 131 is switched by the control unit 30. For example, in a case where the aircraft 1 takes off from the vessel, the switch 131 is switched to the first connection pattern, while in a case where the aircraft 1 lands, the switch 131 is switched to the second connection pattern.

As described above, the position control system 100 for the aircraft 1, the aircraft 1, and the position control method according to the first embodiment to the third embodiment are understood as follows, for example.

A position control system 100 for an aircraft 1 according to a first aspect is a position control system 100 for an aircraft 1 that controls, during takeoff of the aircraft 1 mounted on a moving vehicle (vessel 5) that moves, a relative position of the aircraft 1 with respect to the moving vehicle, the position control system 100 including: a position detection unit (GPS compass 21) that is provided in the aircraft 1 and acquires a position of the aircraft 1; and a control unit 30 that controls a flight operation of the aircraft 1, in which the control unit 30 acquires a movement velocity and a movement direction of the moving vehicle based on a detection result of the position detection unit, and causes the aircraft 1 to execute a climbing flight operation based on the acquired movement velocity and movement direction of the moving vehicle.

According to this configuration, the aircraft 1 can be caused to take off from the moving vehicle in consideration of the movement of the moving vehicle, so that the aircraft 1 can be suitably caused to take off from the moving vehicle without the aircraft 1 physically interfering with the moving vehicle. In addition, since the position of the moving vehicle can be acquired in the aircraft 1, it is not necessary to establish data communication with the moving vehicle, and the aircraft 1 can smoothly take off from the moving vehicle.

As a second aspect, in the position control system 100 for the aircraft 1 according to the first aspect, the control unit 30 sets a target position, and causes the aircraft 1 to execute the climbing flight operation toward the set target position.

According to this configuration, the aircraft 1 can be caused to execute the climbing flight operation toward the target position, so that the target position to be set can be set to a position at which the aircraft 1 and the moving vehicle do not physically interfere with each other, thereby reliably avoiding the physical interference between the aircraft 1 and the moving vehicle.

As a third aspect, in the position control system 100 for the aircraft 1 according to the first or second aspect, the moving vehicle is a vessel.

According to this configuration, the aircraft 1 can suitably take off from the vessel 5.

As a fourth aspect, in the position control system 100 for the aircraft 1 according to any one of the first to third aspects, the position detection unit further acquires a heading of the aircraft.

According to this configuration, since the heading of the aircraft 1 can be acquired in addition to the position of the aircraft 1, the climbing flight operation based on the position and the heading of the aircraft 1 can be executed. As a result, the climbing flight operation of the aircraft 1 can be accurately executed in consideration of the movement of the moving vehicle and the aircraft 1.

As a fifth aspect, in the position control system 100 for the aircraft 1 according to any one of the first to fourth aspects, the control unit 30 acquires a change in motion of the moving vehicle based on the detection result of the position detection unit, and determines whether the climbing flight operation is executable, based on the acquired change in the motion of the moving vehicle.

According to this configuration, the aircraft 1 can be caused to take off from the moving vehicle in response to the motion of the moving vehicle, so that the aircraft 1 can stably take off from the moving vehicle.

As a sixth aspect, in the position control system 100 for the aircraft 1 according to any one of the first to fifth aspects, there is further provided a pitch-down unit that causes the aircraft 1 to pitch down relative to the moving vehicle during the climbing flight operation of the aircraft 1.

According to this configuration, even in a case where the relative wind is set for the aircraft 1, the aircraft 1 can be set to the pitch-down state, so that the aircraft 1 can stably take off from the moving vehicle.

As a seventh aspect, in the position control system 100 for the aircraft 1 according to any one of the first to sixth aspects, the pitch-down unit is a placement platform (platform for UAV takeoff and landing on vessels 60) provided at a takeoff point of the moving vehicle from which the aircraft 1 takes off, and the placement platform changes an inclination angle of a placement surface on which the aircraft 1 is placed, with respect to an installation surface of the takeoff point.

According to this configuration, the aircraft 1 can be easily set to the pitch-down state by only changing the inclination angle of the placement platform.

An aircraft 1 according to an eighth aspect includes the position control system 100 for the aircraft 1.

According to this configuration, the aircraft 1 that can suitably and smoothly take off from the moving vehicle can be provided.

A position control method for an aircraft 1 according to a ninth aspect is a position control method for an aircraft 1 that is executed by a position control system 100 that controls, during takeoff of the aircraft 1 mounted on a moving vehicle that moves, a relative position of the aircraft 1 with respect to the moving vehicle, the position control method including: via the position control system 100, acquiring a movement velocity and a movement direction of the moving vehicle based on a detection result of a position detection unit that is provided in the aircraft 1; and causing the aircraft to execute a climbing flight operation based on the acquired movement velocity and movement direction of the moving vehicle.

According to this configuration, the aircraft 1 can be caused to take off from the moving vehicle in consideration of the movement of the moving vehicle, so that the aircraft 1 can be suitably caused to take off from the moving vehicle without the aircraft 1 physically interfering with the moving vehicle. In addition, since the position of the moving vehicle can be acquired in the aircraft 1, it is not necessary to establish data communication with the moving vehicle, and the aircraft 1 can smoothly take off from the moving vehicle.

### Reference Signs List

1: aircraft
5: vessel
7: marker
10: camera
20: navigation device
21: GPS compass
30: control unit
32: image processing unit
34: guidance calculation unit
36: flight control unit
40: data transmission device
50: control unit
55: automatic vessel landing calculation device
60: platform for UAV takeoff and landing on vessels
70: navigation device
71: GPS compass
80: data transmission device
90: operation display unit
100: position control system

## Claims

1. An aircraft position control system that controls, during takeoff of an aircraft mounted on a moving vehicle that moves, a relative position of the aircraft with respect to the moving vehicle, the aircraft position control system comprising:
a position detection unit that is provided in the aircraft and acquires a position of the aircraft; and
a control unit that controls a flight operation of the aircraft,
wherein the control unit acquires a movement velocity and a movement direction of the moving vehicle based on a detection result of the position detection unit, and
the control unit causes the aircraft to execute a climbing flight operation based on the acquired movement velocity and movement direction of the moving vehicle.

2. The aircraft position control system according to Claim 1,
wherein the control unit sets a target position, and causes the aircraft to execute the climbing flight operation toward the set target position.

3. The aircraft position control system according to Claim 1,
wherein the moving vehicle is a vessel.

4. The aircraft position control system according to Claim 1,
wherein the position detection unit further acquires a heading of the aircraft.

5. The aircraft position control system according to Claim 1,
wherein the control unit acquires a change in motion of the moving vehicle based on the detection result of the position detection unit, and
the control unit determines whether the climbing flight operation is executable, based on the acquired change in the motion of the moving vehicle.

6. The aircraft position control system according to Claim 1, further comprising:
a pitch-down unit that causes the aircraft to pitch down relative to the moving vehicle during the climbing flight operation of the aircraft.

7. The aircraft position control system according to Claim 6,
wherein the pitch-down unit is a placement platform provided at a takeoff point of the moving vehicle from which the aircraft takes off, and
the placement platform changes an inclination angle of a placement surface on which the aircraft is placed, with respect to an installation surface of the takeoff point.

8. An aircraft comprising:
the aircraft position control system according to any one of Claims 1 to 7.

9. An aircraft position control method executed by a position control system that controls, during takeoff of an aircraft mounted on a moving vehicle that moves, a relative position of the aircraft with respect to the moving vehicle, the aircraft position control method comprising:
via the position control system,
acquiring a movement velocity and a movement direction of the moving vehicle based on a detection result of a position detection unit that is provided in the aircraft; and
causing the aircraft to execute n climbing flight operation based on the acquired movement velocity and movement direction of the moving vehicle.
